# EUROPEAN PATENT APPLICATION

(11) **EP 4 844 340 A2**
(43) Date of publication of application: **25.11.2026**
(21) Application number: 26170926.5
(22) Date of filing: 07.04.2026
(51) Int. Cl.: G01C 7/02, E01C 23/01, G01C 21/00

(54) **ROADBED CREATION VISUALIZATION FOR FUTURE FAILURE ANALYSIS**

(30) Priority: 23.05.2025 US 202519217870
(71) Applicant: Deere & Company, Moline, IL 61265 (US)
(72) Inventor: Rains, Gerald E., 68163 Mannheim (DE); Davis, Travis J., 68163 Mannheim (DE)
(74) Representative: Holst, Sönke

(57) **Abstract**

Systems and methods of mapping roadbed layers and conducting a roadbed failure analysis are disclosed. A method of mapping roadbed layers includes scanning a roadbed to generate data representing a first stage, scanning the roadbed to generate data representing a second stage, determining, from the generated data, a plurality of three-dimensional data points, and generating a layered representation of the roadbed, wherein each layer corresponds to a different stage of the roadbed's construction or maintenance. A method of performing a roadbed failure analysis includes identifying a first irregularity in the layered representation associated with an identified real-world failure point of the roadbed, identifying a second irregularity in the layered representation having at least a threshold similarity to the first irregularity, wherein the second irregularity is associated with a predicted real-world failure point of the roadbed, and causing a user to be notified of the predicted real-world failure point.

## Description

### TECHNICAL FIELD

This disclosure relates generally to roadbed construction and maintenance, and more specifically to a system of mapping roadbed layers to identify sources of failure in a roadbed.

### BACKGROUND

Over time, failure points such as sinking, cracking, potholes, and disintegration may appear in a roadbed. Road maintenance crews cut out a damaged section of the roadbed around the failure points and replace the damaged section with a concrete patch or asphalt. This can remedy underlying defects in the roadbed which are not visible from the surface. However, similar defects in the roadbed may remain undetected, leading to preventable failures of the roadbed in the future.

### SUMMARY

A system and method of mapping roadbed layers for future failure analysis is described herein. The system includes a plurality of vehicle-mounted sensors configured to scan a roadbed as the vehicle traverses the roadbed during two or more stages of roadbed construction or maintenance. The plurality of vehicle-mounted sensors generate roadbed data which is transmitted to a platform server to construct a three-dimensional layered mapping of the roadbed, each layer of the three-dimensional layered mapping corresponding to a different stage of the roadbed's construction or maintenance.

Once a real-world failure point of the roadbed has been identified (e.g., by aggregating user-submitted reports of road quality), the method includes accessing the three-dimensional layered mapping of the roadbed, identifying a first irregularity (e.g., a defect) in the three-dimensional layered mapping associated with the real-world failure point, identifying a second irregularity in the three-dimensional layered mapping having at least a threshold similarity to the first irregularity, identifying a predicted real-world failure point of the roadbed associated with the second irregularity, and allowing a user (e.g., a maintenance worker) to be notified of the predicted real-world failure point via a graphical user interface (GUI) of a client device. Advantageously, this allows maintenance work to be performed on the roadbed preemptively to correct underlying defects before they develop into noticeable failure points and may provide insights as to roadbed creation techniques.

In some embodiments, the techniques described herein relate to a method of failure analysis for a roadbed, the method including: accessing a three-dimensional mapping of the roadbed, the three-dimensional mapping including two or more layers of the roadbed, wherein each layer corresponds to a different stage of the roadbed's construction or maintenance; identifying a first irregularity in the three-dimensional mapping associated with an identified real-world failure point of the roadbed; identifying a second irregularity in the three-dimensional mapping having at least a threshold similarity to the first irregularity, wherein the second irregularity is associated with a predicted real-world failure point of the roadbed; and causing a user to be notified of the predicted real-world failure point of the roadbed.

In some embodiments, the techniques described herein relate to a method of generating a three-dimensional roadbed mapping, the method including: scanning, by a first sensor during a first stage of roadbed construction or maintenance, a roadbed to generate data representing the first stage of the roadbed; scanning, by a second sensor during a second stage of roadbed construction or maintenance, the roadbed to generate data representing the second stage of the roadbed; determining, from the generated data, a plurality of three-dimensional data points representing the first stage and the second stage of the roadbed; and generating, using the plurality of three-dimensional data points, a layered representation of the roadbed, wherein each layer corresponds to a different stage of the roadbed's construction or maintenance.

In some embodiments, the techniques described herein relate to a vehicle including: a sensor suite including a depth sensor and an infrared sensor configured to scan a roadbed surface during two or more stages of roadbed construction or maintenance; and a non-transitory computer-readable storage medium configured to store sensor data, including depth data and infrared data; wherein the vehicle is configured to transmit the sensor data to a remote server to generate a three-dimensional roadbed map using the sensor data from the two or more stages.

### BRIEF DESCRIPTION OF THE DRAWINGS

The disclosed embodiments have other advantages and features which will be more
readily apparent from the detailed description, the appended claims, and the accompanying figures (or drawings). A brief introduction of the figures is below.
FIG. IA is a block diagram of a system environment in which a vehicle operates, in accordance with at least one embodiment.
FIG. IB is a block diagram of a platform server of the system environment of FIG. IA, in accordance with at least one embodiment.
FIG. 2 is a block diagram illustrating components of an example machine for reading and executing instructions from a machine-readable medium, in accordance with at least one embodiment.
FIG. 3 is a cross-sectional elevational view of a roadbed, in accordance with at least one embodiment.
FIGS. 4A-4C are schematic representations of a vehicle scanning a roadbed surface, in accordance with various embodiments.
FIG. 5 depicts a graphical user interface (GUI) for reviewing a failure analysis of a roadbed based on a three-dimensional layered mapping, in accordance with at least one embodiment.
FIG. 6 is a flowchart illustrating a method of generating a three-dimensional roadbed mapping, in accordance with at least one embodiment.
FIG. 7 is a flowchart illustrating a method of failure analysis for the roadbed based on the three-dimensional roadbed mapping of FIG. 6, in accordance with at least one embodiment.

### DETAILED DESCRIPTION

Roadbeds can develop issues like sinking, cracking, potholes, and disintegration over time. A system for mapping roadbed layers for future failure analysis uses vehicle-mounted sensors to scan the roadbed during construction or maintenance stages, generating data to create a 3D layered mapping of the roadbed. When a real-world failure point in the roadbed is identified, a method accesses the 3D layered mapping to identify an irregularity, finds similar irregularities in the 3D layered mapping by calculating a similarity score, predicts potential real-world failure points, and causes a user to be notified through a graphical user interface (GUI). This proactive approach allows for early correction of defects before they become major issues.

The Figures (FIGS.) and the following description relate to preferred embodiments by way of illustration only. It should be noted that from the following discussion, alternative embodiments of the structures and methods disclosed herein will be readily recognized as viable alternatives that may be employed without departing from the principles of what is claimed. **[0019]**

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

### Example Vehicle System Environment

FIG. IA illustrates a system environment 100, according to some embodiments. The system environment 100 of FIG. IA includes one or more vehicles 110 ("vehicles" hereinafter), a network 120, a platform server 130, and one or more client devices 140. It should be noted that in other embodiments, the environment 100 may include different, fewer, or additional components than those illustrated in FIG. IA. For instance, the client device 140 and the platform server 130 may be the same device.

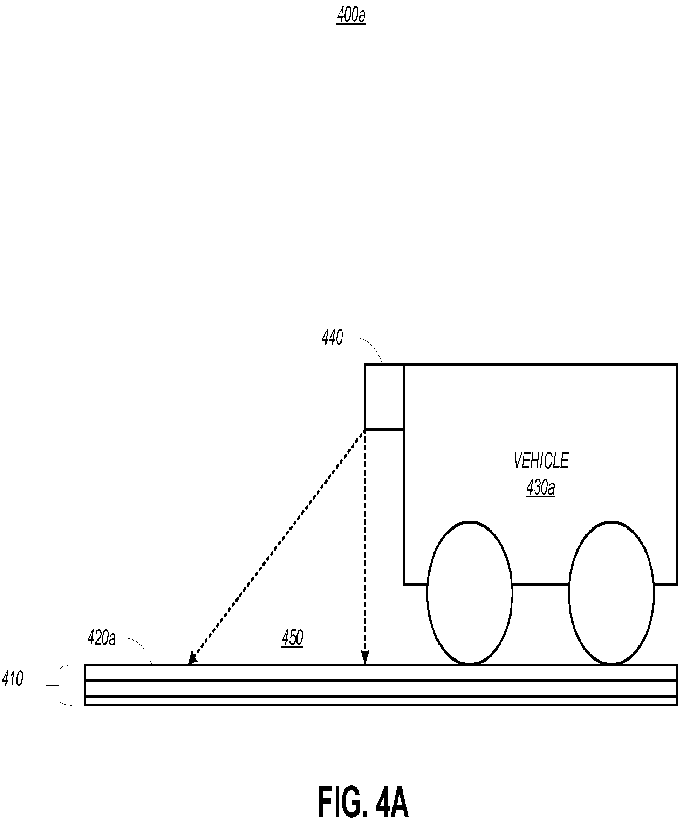

Each vehicle 110 of FIG. IA may be a vehicle (e.g., item of heavy equipment, vehicle, apparatus, system, robot, and the like) that is configured to move and/or operate autonomously and that is configured to communicate with the platform server 130. Examples of vehicles 110 within the scope of this description include but are not limited to loaders such as backhoe loaders, track loaders, wheel loaders, skid steer loaders, scrapers, graders, bulldozers, compactors, excavators, mini-excavators, trenchers, skip loaders, tracked vehicles, construction vehicles, tractors, transport vehicles, delivery vehicles, distribution vehicles, aerial vehicles, and the like. Collectively, the one or more vehicles 110 may correspond to a vehicle fleet that includes one or more of each of different types of vehicles 110 that respectively have different functionality. Example embodiments and functional components of the vehicles 110 are described in greater detail below in at least FIGS. 4A-4C.

Each vehicle 110 may include one or more sensors 115 and a mapping application 116. In some embodiments (e.g., an autonomous vehicle 110), the mapping application 116 facilitates autonomous navigation of the vehicle 110 through the environment 100 based on sensor data. The one or more sensors 115 may include depth sensors, temperature sensors, density sensors, moisture sensors, color sensors, brightness sensors, infrared sensors, and the like. In some embodiments, the depth sensors may include light detection and ranging (LiDAR) sensors, radio detection and ranging (RADAR) sensors, stereo image sensors (e.g., stereo cameras), or a combination thereof. In various embodiments, the sensors 115 can include one or more cameras, such as a thermal camera. A plurality of sensors 115 may be included inside a unified assembly (hereinafter referred to as a "sensor suite"). Sensors 115 may be located on a body of the vehicle 110, a peripheral portion of the vehicle 110 (e.g., a trailer), a movable portion of the vehicle 110 (e.g., an articulating arm), and the like. In some embodiments, sensors 115 may be provided at multiple locations on a vehicle 110 (e.g., in a stereo configuration). The one or more sensors 115 are configured to scan (e.g., acquire environmental data of) the surrounding environment 100 and generate sensor data for processing by the mapping application 116.

The mapping application 116 of the vehicle 110 accesses sensor data of the one or more sensors 115 to identify areas of the environment 100 for which sensor data has not yet been generated. The mapping application 116 may use geolocation data (e.g., metadata) associated with the sensor data to determine whether an area of the environment 100 has already been scanned. The mapping application 116 may direct an operator of the vehicle 110 (or direct a navigation module of the vehicle 110 in the case of an autonomous vehicle) to navigate the vehicle 110 to a new area of the environment 100. In some embodiments, the mapping application 116 of a first vehicle 110 may communicate with a mapping application 116 of a second vehicle 110 to cause both vehicles to traverse different areas of the environment 100. As will be discussed herein, sensor data generated in the course of traversal of the environment 100 by one or more vehicles 110 is transmitted to the platform server 130 for additional processing.

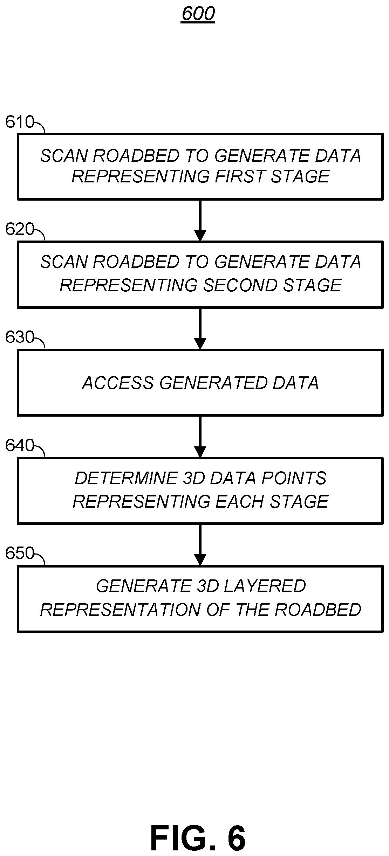

The platform server 130 is a computing system located, e.g., remotely from the vehicle 110. In some embodiments, the platform server 130 is a web server or other computer configured to receive data from and/or send data to one or more vehicles 110 within the environment 100. In some embodiments, the platform server 130 receives information from the vehicle 110 (e.g., obstacle data, quality control condition data, sensor data, etc.) indicating a location of the vehicle 110, information describing the surroundings of the vehicle 110, and the like. In some embodiments, the platform server 130 may receive a real-time feed of data from the vehicle 110, such as a real-time video feed of the environment surrounding the vehicle 110. In some embodiments, the platform server 130 can provide information to the vehicle 110, such as an instruction to perform an operation or function (e.g., scanning an unmapped portion of the environment), a navigation instruction (such as a route), synced obstacle data, and the like. In some embodiments, the platform server 130 can enable a remote operator to provide manual navigation or operation instructions to an autonomous vehicle 110. In some embodiments, some of the functionality of the vehicle 110 described below in connection with, e.g., FIGS. 6-7 may be subsumed by the platform server 130. For example, sensor data from the vehicle 110 may be transmitted to the platform server 130, and the platform server 130 may subsume the functionality corresponding to a map creation operation.

Each of the one or more client devices 140 is a computing device, such as a computer, a laptop, a mobile phone, a tablet computer, or any other suitable device configured to receive information from or provide information to the platform server 130. The client device 140 includes a display configured to receive information from the platform server 130 that may include information representative of one or more of the vehicles 110 or the environment 100.
The client device 140 can also generate notifications (e.g., based on identifications performed by the platform server 130) for display to a user. The client device 140 can include input mechanisms (such as a keypad, a touch-screen monitor, and the like), enabling a user of the client device 140 to provide instructions to a selected one of the vehicles 110 (e.g., via the platform server 130). It should be noted that although the client device 140 is described herein as coupled to a vehicle 110 via the platform server 130, in practice, the client device 140 may communicatively couple directly to the vehicle 110 (enabling a user to receive information from or provide instructions to the vehicle 110 without going through the platform server 130).

As noted above, the systems or components of FIG. IA are configured to communicate via a network 120, which may include any combination of local area and/or wide area networks, using both wired and/or wireless communication systems. In one embodiment, the network 120 uses standard communications technologies and/or protocols. For example, the network 120 includes communication links using technologies such as Ethernet, 802.11, worldwide interoperability for microwave access **(WiMAX),** 3G, 4G, code division multiple access (CDMA), digital subscriber line (DSL), etc. Examples of networking protocols used for communicating via the network 120 include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 120 may be represented using any suitable format, such as hypertext markup language (HTML) or extensible markup language (XML). In some embodiments, all or some of the communication links of the network 120 may be encrypted using any suitable technique or techniques.

FIG. IB illustrates components of the platform server 130 of FIG. IA, according to some embodiments. The platform server 130 may include an interface generation module 135 configured to generate one or more interfaces for viewing by a user (such as a user of the platform server 130 or a user of the client device 140). The user can be a remote operator of the vehicle 110, can be an individual associated with the environment 100 (such as a supervisor, a consultant, etc.), can be an individual associated with the vehicle 110 (such as an operator, a repairman, an on-site coordinator, or the like), or can be any other suitable individual. The interface generation module 135 can be used by a user to provide one or more instructions to a vehicle 110, such as autonomous navigation instructions, operation or function instructions, and the like. The interface generation module 135 can generate a user interface displaying information associated with the vehicle 110, other vehicles, or the environment 100. For instance, the user interface can include a map illustrating a location and/or movement of each of the vehicles 110 within the geographic area, a path plan generated for each vehicle 110, a respective set of locations where the environment was scanned by each vehicle 110, a current status of the vehicle 110, potential failure points of a roadbed in the environment 100, any notifications or other data received from each vehicle 110, and the like. The user interface can display notifications generated by and/or received from the vehicle 110, for instance, within a notification feed, as pop-up windows, using icons within the map interface, and the like. By communicatively coupling to multiple vehicles 110, the platform server 130 beneficially enables one user to track, monitor, and/or control multiple vehicles simultaneously.

The platform server 130 may include a map generation module 136 configured to generate a three-dimensional layered mapping (hereinafter "3D layered mapping") of a roadbed in the environment 100. (While described herein as three-dimensional, it will be understood the 3D layered mapping can be any type of mapping having at least three dimensions known to those skilled in the art.) The 3D layered mapping (or a portion thereof) may be viewed by the user, such as via a GUI of the platform server 130 or the client device 140. As discussed herein, the map generation module 136 is configured to generate the 3D layered mapping based on sensor data generated by the one or more sensors 115 of the one or more vehicles 110.

The platform server 130 may include a failure prediction module 137 for performing a roadbed failure analysis based on the 3D layered map. The failure prediction module 137 may be configured to identify one or more predicted real-world failure points in a roadbed of the environment 100 based on irregularities detected in the 3D layered map.

The platform server 130 may include a treatment module 138 for determining a treatment to be applied to the roadbed based on the results of the roadbed failure analysis. The treatment module 138 may access the one or more predicted real-world failure points in the roadbed of the environment 100 and recommend a roadbed treatment to remedy irregularities at the one or more predicted real-world failure points to prevent the predicted failure point(s). In certain embodiments, the treatment module 138 may cause a vehicle 110 to implement the roadbed treatment autonomously. In other embodiments, the treatment module 138 may cause a GUI of the client device 140 to display a notification alerting the user to the recommended treatment.

Data generated by the map generation module 136, failure prediction module 137, treatment module 138, the vehicle 110, the client device 140, or a combination thereof may be stored in a database 139 of the platform server 130. For instance, the map generation module 136 may generate or update the 3D layered mapping of the roadbed when sensor data is received from a vehicle 110. The 3D layered mapping may be stored in the database 139 and later accessed to perform failure analysis by the failure prediction module 137 (e.g., after a real-world failure point of the roadbed has been identified).

### Example Computer System

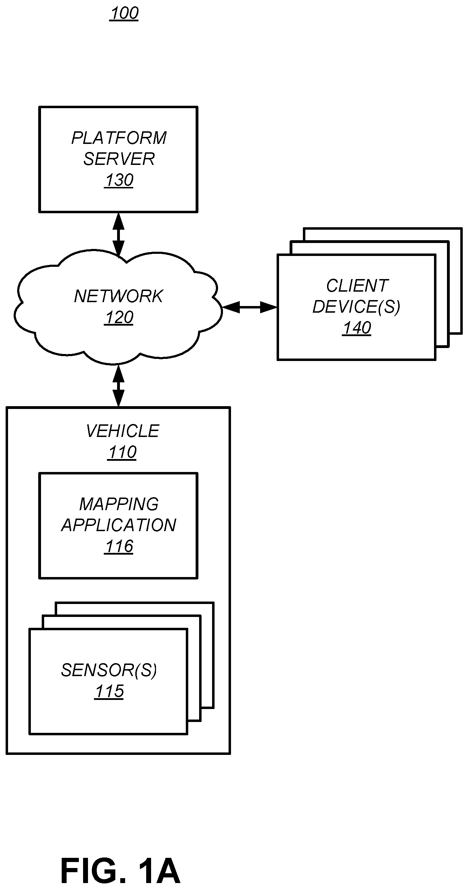

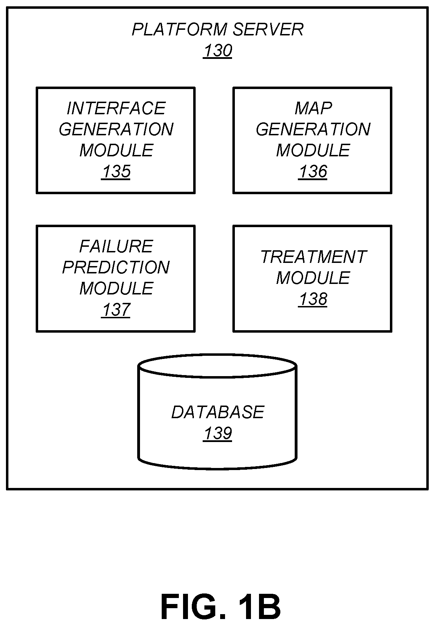

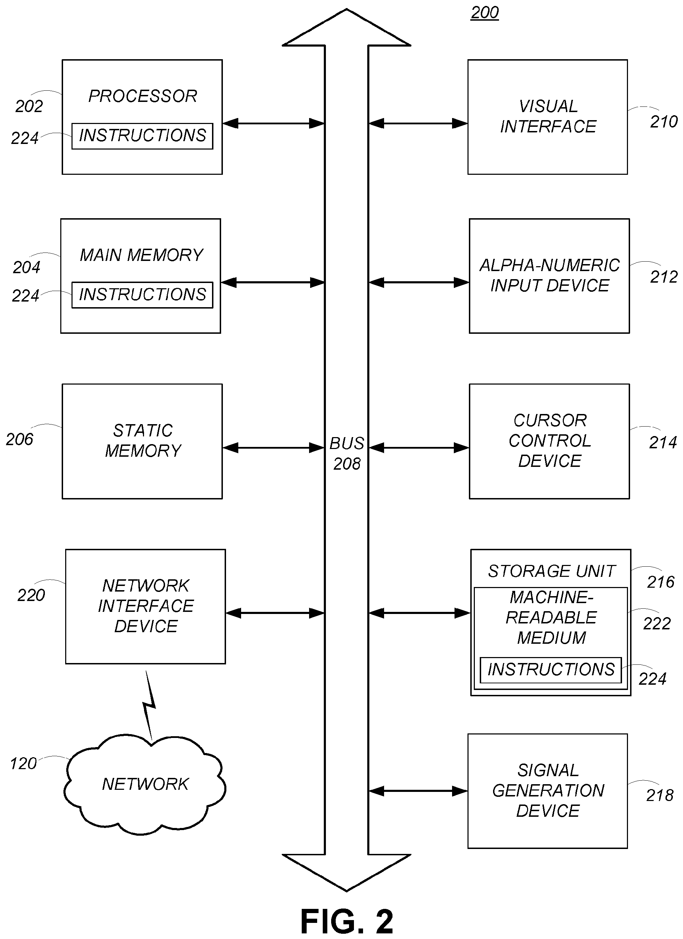

FIG. 2 is a block diagram illustrating components of an example machine for reading and executing instructions from a machine-readable medium, in accordance with one or more example embodiments. Specifically, FIG. 2 shows a diagrammatic representation of one or more of the vehicle 110, the platform server 130, or the client device 140 of FIG. IA, in the example form of a computer system 200.

The computer system 200 can be used to execute instructions 224 (e.g., program code or software) for causing the machine to perform any one or more of the methodologies (or processes) or modules described herein. In alternative embodiments, the machine operates as a standalone device or a connected (e.g., networked) device that connects to other machines. In a networked deployment, the machine may operate in the capacity of a server machine or a client machine in a client-server network environment, or as a peer machine in a peer-to-peer (or distributed) network environment.

The machine may be a server computer, a client computer, a personal computer (PC), a tablet PC, a set-top box (STB), a smartphone, an internet of things (IoT) appliance, a network router, switch or bridge, or any machine capable of executing instructions 224 (sequential or otherwise) that specify actions to be taken by that machine. Further, while only a single machine is illustrated, the term "machine" shall also be taken to include any collection of machines that individually or jointly execute instructions 224 to perform any one or more of the methodologies discussed herein.

The example computer system 200 includes one or more processing units (generally processor 202). The processor 202 is, for example, a central processing unit (CPU), a graphics processing unit (GPU), a digital signal processor (DSP), a control system, a state machine, one or more application specific integrated circuits (ASICs), one or more radio-frequency integrated circuits (RFICs), or any combination of these. The computer system 200 also includes a main memory 204. The computer system may include a storage unit 216. The processor 202, memory 204, and the storage unit 216 communicate via a bus 208.

In addition, the computer system 200 can include a static memory 206, a graphics display 210 (e.g., to drive a plasma display panel (PDP), a liquid crystal display (LCD), or a projector). The computer system 200 may also include an alphanumeric input device 212 (e.g., a keyboard), a cursor control device 217 (e.g., a mouse, a trackball, a joystick, a motion sensor, or other pointing instrument), a signal generation device 218 (e.g., a speaker), and a network interface device 220, which also are configured to communicate via the bus 208.

The storage unit 216 includes a machine-readable medium 222 on which is stored instructions 224 (e.g., software) embodying any one or more of the methodologies or functions described herein. For example, the instructions 224 may include the functionalities of modules of one or more of the vehicle(s) 110, the platform server 130, and the client device(s) 140 of FIGS. IA-IB. The instructions 224 may also reside, completely or at least partially, within the main memory 204 or within the processor 202 (e.g., within a processor's cache memory) during execution thereof by the computer system 200, the main memory 204 and the processor 202 also constituting machine-readable media. The instructions 224 may be transmitted or received over a network 226 via the network interface device 220.

### Systems and Methods of Roadbed Visualization

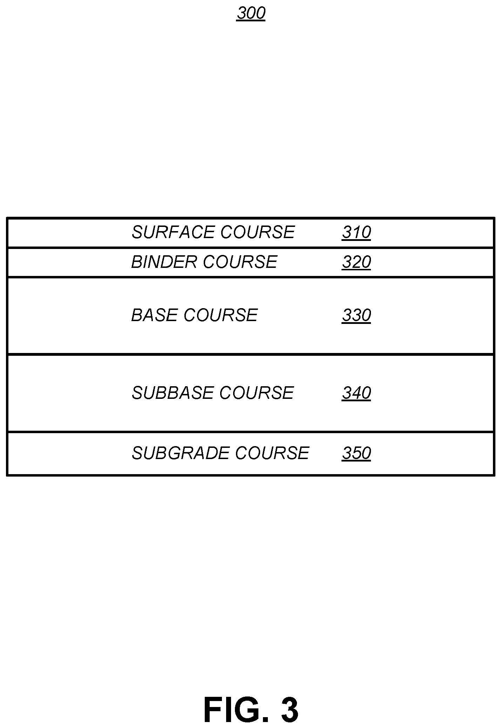

FIG. 3 illustrates a cross-sectional view of a roadbed 300. As used herein, "roadbed" refers to material components of a road including a surface layer and one or more sub-surface layers. For discussion purposes, the roadbed 300 of FIG. 3 is depicted as having five layers, although more or fewer layers are possible. The roadbed 300 includes a surface course layer 310, a binder course layer 320, a base course layer 330, a subbase course layer 340, and a subgrade course layer 350. Examples of roadbed materials include concrete, asphalt, gravel, sand, aggregates, and the like. Each layer of the roadbed 300 may be formed of different roadbed materials, or two or more layers may be formed of the same material. In some embodiments, two or more adjacent layers of the roadbed 300 (such as the surface course layer 310 and the binder course layer 320) may be of the same material but are formed during different stages of the roadbed's construction or maintenance.

The roadbed 300 is constructed by forming and conditioning (e.g., depositing and grading by a motor grader or the like) incremental layers of roadbed material over the preceding sub-surface layers. In the illustrated example, the roadbed 300 may be constructed in five stages corresponding to each of the five layers. In a first stage, the subgrade course layer 350 is formed. (In some instances, the subgrade course layer 350 is an existing earthen layer which must be cleared, tamped down, and/or graded to provide a foundation for the roadbed 300.) In a second stage, the subbase course layer 340 is formed over the subgrade course layer 350. In a third stage, the base course layer 330 is formed over the subbase course layer 340. In a fourth stage, the binder course layer 320 is formed over the base course layer 330. In a fifth stage, the surface course layer 310 is formed over the binder course layer 320. Because subsequent layers of roadbed material are formed over the preceding sub-surface layers, it is difficult to assess the underlying condition of a roadbed until visible failure points are evident in the surface layer. **[0040]** As will be discussed herein, a three-dimensional (3D) layered mapping for documenting each stage of construction or maintenance of the roadbed 300 may include a plurality of 3D points (e.g., a point cloud) obtained by scanning each real-world layer of the roadbed 300 during a different stage of its construction or maintenance. When a vehicle (e.g., the one or more vehicles 110 of FIG. IA) traverses the roadbed 300, the one or more sensors 115 scan an uppermost layer of the roadbed 300, including any irregularities which may be present. By scanning the uppermost layer of the roadbed 300 at each stage of its construction or maintenance, 3D points corresponding to each layer of the roadbed are added to the 3D layered mapping by the map generation module 136 to aid in future failure analysis.

FIG. 4A illustrates a vehicle scanning a roadbed surface during an early stage of roadbed construction or maintenance. The roadbed 410 may be, for example, the roadbed 300 of FIG. 3 during the third stage of construction, after the base course layer 330 is formed. During this early stage of construction or maintenance, a first surface layer 420a (e.g., the base course layer 330) is the uppermost layer of the roadbed 410. As a vehicle 430a (e.g., a vehicle of the one or more vehicles 110) traverses the roadbed 410, a sensor suite 440 comprising one or more vehicle-mounted sensors (e.g., the sensors 115) scans the first surface layer 420a to generate s ensor data. A scanned portion 450 of the first surface layer 420a may include any irregularities (e.g., deviations in material properties of the layer) which are captured in the sensor data. For example, intrusion of water or clay into a portion of the base course layer 330 may be captured by depth sensors, temperature sensors, density sensors, moisture sensors, color sensors, brightness sensors, infrared sensors, or any other sensor 115 of the sensor suite 440. In some embodiments, the sensor suite 440 may include two or more sensors 115 located apart from each other to capture data in stereo. The sensor data may be transmitted to a server (e.g., the platform server 130) to generate a 3D layered mapping of the roadbed.

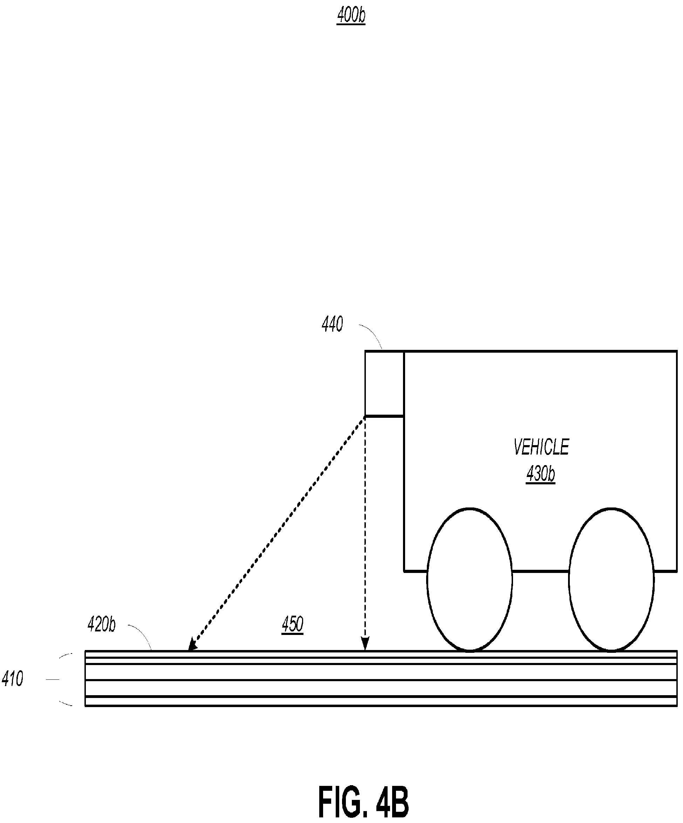

FIG. 4B illustrates a vehicle scanning the roadbed surface of FIG. 4A during a later stage of roadbed construction or maintenance. The roadbed 410 may be, for example, the roadbed 300 of FIG. 3 during the fifth stage of construction, after the surface course layer 310 is formed. During this later stage of construction or maintenance, a second surface layer 420a (e.g., the surface course layer 310) is the uppermost layer of the roadbed 410. As a vehicle 430b (which may be the same vehicle 430a which scanned the first surface layer 420a or a different vehicle of the one or more vehicles 110) traverses the roadbed 410, a sensor suite 440 comprising one or more vehicle-mounted sensors (e.g., the sensors 115) scans the second surface layer 420b to generate sensor data. A scanned portion 450 of the second surface layer 420b may include irregularities (e.g., deviations in material properties of the layer) which are captured in the sensor data. The sensor data may be transmitted to the server (e.g., the platform server 130) to generate an updated 3D layered mapping of the roadbed.

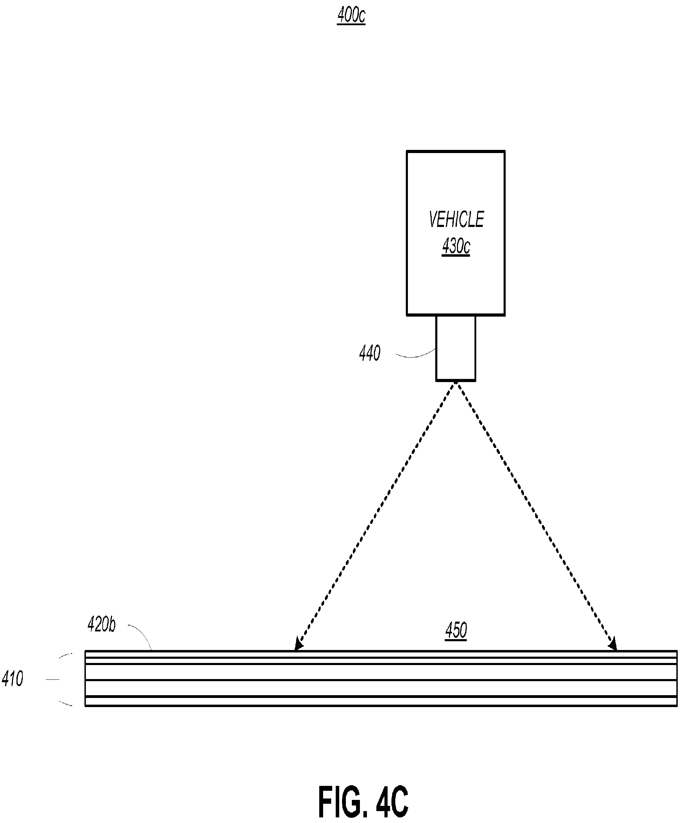

Although FIGS 4A and 4B depict the vehicle 430 as scanning the roadbed 410 during two different stages of construction or maintenance, it will be understood that additional layers (such as any of the layers 310-350 of stages one through five as described above with reference to FIG. 3) may be scanned to generate a comprehensive 3D layered mapping of the roadbed 410. **[0044]** FIG. 4C illustrates a vehicle scanning the roadbed surface of FIG. 4B in accordance with an additional embodiment. In the illustrated embodiment, a vehicle 430c (another one of the plurality of vehicles 110) is an aerial vehicle (e.g., an unmanned aerial vehicle (UAV) or autonomous aerial vehicle) configured to scan the second surface layer 420b. As the aerial vehicle 430c traverses (e.g., flies over) the roadbed 410, a sensor suite 440 comprising one or more sensors (e.g., the sensors 115) scans the second surface layer 420b to generate sensor data. Advantageously, a scanned portion 450 of the second surface layer 420b by the aerial vehicle 430c may cover a wider surface area than that of a ground-based vehicle (e.g., the vehicle 430b) due to the higher vantage point of the vehicle-mounted sensor suite 440. This may allow sensor data and the 3D layered mapping of the roadbed 410 to be generated more quickly.

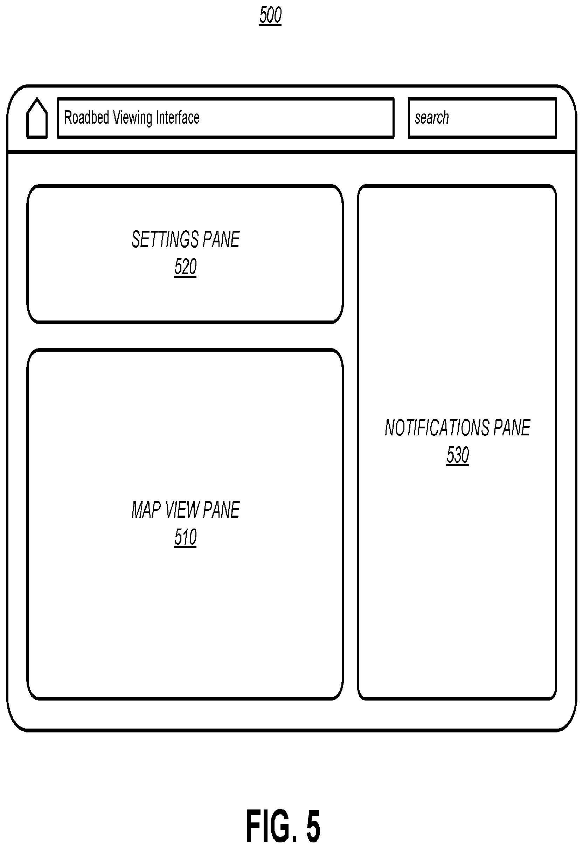

FIG. 5 illustrates a graphical user interface (GUI) for reviewing a failure analysis of a roadbed based on a 3D layered mapping, in accordance with at least one embodiment. The GUI 500 may be displayed on a display collocated with a vehicle (e.g., any of the vehicles 430a-430c) performing construction or maintenance operations on a roadbed (e.g., the roadbed 300) or on a display remotely located from the vehicle (e.g., displays of the one or more client devices 140). In the preferred embodiment, the GUI 500 is a web interface accessed via a browser application of a client device 140.

In the illustrated embodiment, the GUI 500 includes, in a map view pane 510, a map of the roadbed 300 based on one or more layers of the 3D layered mapping. A user (e.g., a vehicle operator, a traffic engineer, and the like) may alternate between different views of the map by interacting with a settings pane 520 of the GUI 500. In some embodiments, the map is a two-dimensional plan view of the 3D layered mapping overlaid on images (e.g., satellite images) of the surrounding environment 100 of the roadbed 300. In various embodiments, the map is a three-dimensional rendering of the 3D layered mapping which may be viewed from different perspectives. The user may indicate, via the settings pane 520, which layers of the 3D layered mapping to show or hide (e.g., by modifying opacity of the layers and/or removing them from view) and an axis or angle of rotation for modifying the map view. The 3D layered mapping may also be viewed as a cross-section of the roadbed 300 similar to the example of FIG. 3.

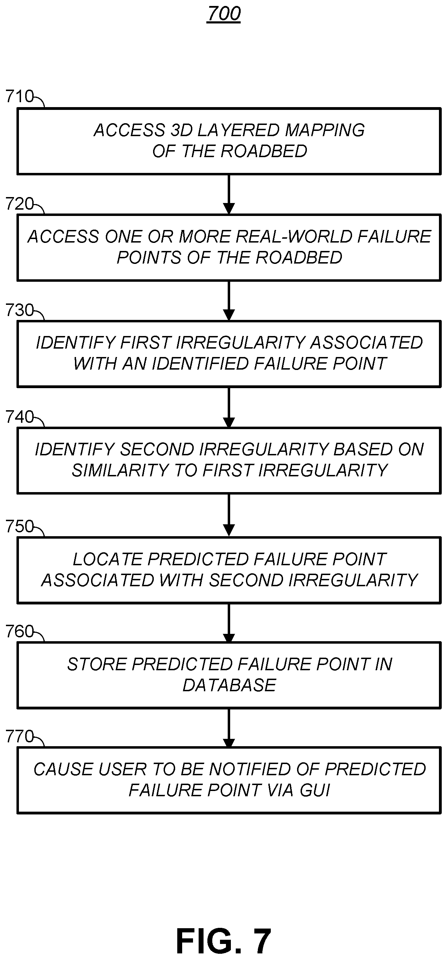

The map view pane 510 may include visible annotations based on a failure analysis performed on the 3D layered mapping, as discussed in greater detail with reference to FIG. 7. Annotations can include pinpoints (e.g., points on the map associated with known real-world failure points or predicted real-world failure points of the roadbed 300), highlighted regions (e.g., regions associated with irregularities of one or more layers of the roadbed 300), user-submitted notes or comments (e.g., "there is a pothole at the intersection of California and Shoreline"), and the like. The user may cause the map view pane 510 to selectively display a subset of annotations by interacting with the settings pane 520.

In the illustrated embodiment, the GUI 500 includes a notifications pane 530 for displaying alerts based on the failure analysis performed on the 3D layered mapping. In an embodiment, the alerts may include text or images associated with one or more annotations of the map view pane 510. For example, a pinpoint associated with a known real-world failure point of the roadbed 300 and displayed in the map view pane 510 may have a corresponding alert displayed in the notifications pane 530. Advantageously, this can allow the user to review incoming annotations (e.g., user-submitted reports) in real time to identify candidate regions of the roadbed 300 for performing a failure analysis and/or maintenance.

The GUI 500 may have alternative configurations than shown in FIG. 5, including for example different, fewer, or additional user interface elements.

FIG. 6 is a flowchart illustrating a method 600 of generating a three-dimensional roadbed mapping, in accordance with at least one embodiment. The method 600 may include additional, fewer, or different steps than described. Additionally, the steps may be performed in a different order.

In a step 610, a vehicle (e.g., the vehicle 430a) scans a roadbed (e.g., the roadbed 300) by a first sensor (e.g., one or more of the one or more sensors 115) to generate sensor data representing a first stage of the roadbed's construction or maintenance. In certain embodiments, two or more sensors 115 of a first sensor suite 440a may each perform a scanning operation in the step 610.

In a step 620, a vehicle (e.g., the vehicle 430b) scans the roadbed 300 by a second sensor (e.g., one or more of the one or more sensors 115) to generate sensor data representing a second stage of the roadbed's construction or maintenance. In certain embodiments, two or more sensors 115 of a second sensor suite 440b may each perform a scanning operation in the step 620.

The sensor data may include depth data, temperature data, density data, moisture data, color data, brightness data, infrared data, and/or any other data obtained by the one or more sensors 115 of the sensor suite 440. In some instances, the first sensor and the second sensor may be the same sensor or the same type of sensor. For example, the same vehicle 430 may traverse the roadbed at multiple different stages of the roadbed's construction or maintenance to perform the steps 610 and 620. In other embodiments, the first sensor and the second sensor may be different sensors of the same sensor suite 440 (e.g., wherein the vehicle 430a which scans the roadbed 300 by the first sensor is the same vehicle 430b which scans the roadbed 300 by the second sensor). In various embodiments, the step 610 and the step 620 may be performed by different vehicles having different sensors 115.

In a step 630, the generated sensor data is accessed (e.g., by a processor or a set of processors of the platform server 130 or another computer system 200) to generate the 3D layered mapping. In a step 640, the processor(s) determine, from the generated data, a plurality of three-dimensional data points (e.g., a point cloud) representing the first stage of the roadbed's construction or maintenance and the second stage of the roadbed's construction or maintenance. Referring again to the example of FIGS. 4A and 4B, the plurality of three-dimensional data points may represent the first surface layer 420a and the second surface layer 420b of the roadbed 410. In a step 650, the processor(s) generate, using the plurality of three-dimensional data points, a layered representation of the roadbed (e.g., the 3D layered representation) wherein each layer corresponds to a different stage of the roadbed's construction or maintenance. The steps 640 and 650 of determining the plurality of three-dimensional data points and generating the layered representation of the roadbed may be performed by applying a normal distributions transform (NDT), convolutional neural network (CNN), depth estimation algorithm, structure-from-motion (SfM), feature mapping, Kuhn-Munkres algorithm, or any other technique known to those skilled in the art to the sensor data.

In some embodiments, the method 600 may include accessing, by a vehicle (e.g., by a processor of the vehicle 430b), the layered representation of the roadbed 300 to perform one or more operations on the roadbed 300, such as a movement operation, a navigation operation, a scanning operation, a construction operation, a demolition operation, and the like. In certain embodiments, the method 600 may include navigating, by the vehicle, to a location on the roadbed 300 associated with one or more three-dimensional data points which have been flagged in the layered representation for re-scanning. In some embodiments, the method 600 may include scanning, by the vehicle, a portion of the roadbed 300 using a different sensor or type of sensor of the sensor assembly than was used in the step 610. For example, if the vehicle (or a fleet of vehicles) initially scanned the roadbed 300 using LiDAR, the vehicle (or the fleet of vehicles) may access the layered representation and re-scan a portion of the roadbed 300 using a thermal camera.

FIG. 7 is a flowchart illustrating a method 700 of failure analysis for the roadbed based on the three-dimensional layered mapping of FIG. 6, in accordance with at least one embodiment. The method 700 may include additional, fewer, or different steps than described. Additionally, the steps may be performed in a different order.

In a step 710, the 3D layered mapping of the roadbed (e.g., the roadbed 300) is accessed (e.g., by a processor or a set of processors of the platform server 130 or another computer system 200) to obtain the two or more layers of the roadbed 300 each corresponding to a different stage of the roadbed's construction or maintenance. In a step 720, one or more real-world failure points of the roadbed 300 are accessed (e.g., from the database 139 of the platform server 130), wherein the one or more real-world failure points of the roadbed 300 correspond to points or regions of the 3D layered mapping of the step 710. The one or more real-world failure points of the roadbed 300 may be collated in the database 139 from user-submitted reports (e.g., via the GUI 500 of FIG. 5).

In a step 730, the processor(s) identify a first irregularity in the 3D layered mapping associated with one or more of the identified real-world failure points of the roadbed 300. As used herein, an irregularity is any deviation in material properties of a layer (or a plurality of layers) such as deviations in thickness, density, composition,
texture, and the like. Identifying the first irregularity in step 730 can include determining whether a deviation in one or more layers of the 3D layered mapping meets or exceeds a deviation threshold (e.g., a minimum amount of deviation as compared to material properties of the surrounding layer(s). In some embodiments, identifying the first irregularity in step 730 can further include determining a perimeter of the first irregularity based on the deviation threshold. (The perimeter of the first irregularity may be displayed in the map view of the map pane 510 of the GUI 500 to visualize a region of the 3D layered mapping associated with the first irregularity.) In some embodiments, a user may provide feedback via the GUI 500 (e.g., via the settings pane 520) to adjust the deviation threshold which determines the perimeter. In some embodiments, identifying the first irregularity in step 730 can further include calculating a first similarity score for the first irregularity.

In a step 740, the processor(s) identify a second irregularity in the 3D layered mapping having at least a threshold similarity to the first irregularity, wherein the second irregularity is associated with a predicted real-world failure point of the roadbed. Identifying the second irregularity in step 740 may include determining whether a candidate irregularity in one or more layers of the 3D layered mapping meets or exceeds a deviation threshold, and may further include calculating a second similarity score for the candidate irregularity. The first similarity score and the second similarity score may be calculated based on characteristics of the first irregularity and the second irregularity, such as a type of deviation in material properties (e.g., composition or density), a size of the deviation as determined by the perimeter (e.g., circumference or surface area), a depth or thickness of the deviation, identification of specific layer(s) at which the deviation is present, or any other characteristic of an irregularity which may be extracted from the sensor data and/or 3D layered mapping. When the first similarity score of the first irregularity and the second similarity score of the candidate irregularity are determined to be within the threshold similarity (e.g., within ±5%, ±10%, ±20%, or ±50% of the first similarity score), the candidate irregularity becomes the second irregularity. Identifying the first irregularity in step 730 and identifying the second irregularity in step 740 may include determining a layer of the 3D layered mapping associated with each of the irregularities.

In some embodiments, calculating the first similarity score and the second similarity score may be performed by one or more artificial intelligence (AI) models trained to recognize irregularities in roadbed layers. For example, the Al model(s) may include an object detection model (ODM) trained on sample data including images and/or 3D layered mappings of sample roadbed layers. In various embodiments, the one or more Al models may include transformer-based models, convolutional neural networks (CNNs), region-based models, hybrid models, or a combination thereof. The one or more Al models may calculate a similarity score for each scanned portion of the roadbed and flag those which have at least a threshold similarity to the first similarity score as candidates for further analysis.

In some embodiments, identifying the second irregularity in step 740 further includes determining a perimeter of the second irregularity based on the deviation threshold. (The perimeter of the second irregularity may be displayed in the map view of the map pane 510 of the GUI 500 to visualize a region of the 3D layered mapping associated with the second irregularity.) In some embodiments, the user may provide feedback via the GUI 500 (e.g., via the settings pane 520) to adjust the deviation threshold which determines the perimeter of the second irregularity. In some embodiments, a plurality of second irregularities may be identified in step 740, each of the plurality of second irregularities having at least a threshold similarity to the first irregularity.

In various embodiments, identifying the second irregularity in step 740 further includes determining a first failure mode for the identified real-world failure point based on the first irregularity, determining a second failure mode for the second irregularity in the three-dimensional mapping which is a same failure mode as the first failure mode, and identifying a point on a surface of the three-dimensional mapping of the roadbed corresponding to a location of the second irregularity, wherein the point on the surface is the predicted real-world failure point of the roadbed. Examples of failure modes resulting in real-world failures points include temperature-related failure modes (e.g., excessive heating or cooling of roadbed layer(s)), material-related failure modes (e.g., improper or inconsistent material composition), construction-related failure modes (e.g., improper or inconsistent layer thickness or density), and wear-related failure modes (e.g., excessive layer compaction, water intrusion, etc.).

In a step 750, the processor(s) locate the predicted real-world failure point of the roadbed 300 associated with the identified second irregularity. In some embodiments, the predicted real-world failure point may be determined geometrically (e.g., at a midpoint or centroid of the second irregularity), though other techniques may be used. For example, an object detection model may identify a candidate location associated with the most likely real-world failure point based on its training data. In some embodiments, multiple predicted real-world failure points may be determined, such as when a plurality of second irregularities are identified in step 740.

In a step 760, the predicted real-world failure point(s) are stored in the database 139.

In a step 770, the processor(s) cause a user to be notified of the predicted real-world failure point(s) of the roadbed, such as via an alert displayed in the notifications pane 530 of the GUI 500. The notification may be accompanied by an annotation (e.g., a pinpoint) displayed in the map view pane 510 corresponding to the location(s) of the predicted real-world failure point(s) in the 3D layered mapping. In some embodiments, the map view pane 510 may visually distinguish a region of the 3D layered mapping associated with the first irregularity and/or a region of the 3D layered mapping associated with at least one second irregularity (e.g., the perimeter). In various embodiments, the user may select between two or more views of the 3D layered mapping (each view displaying a different irregularity and/or real-world failure point) by interacting with the settings pane 520. An alert or annotation may include additional information about the predicted real-world failure point(s) as determined from the 3D layered mapping and other sources, such as an age of the affected layer(s), a severity of the predicted real-world failure point, an estimated cost to repair the second irregularity, a calendar of scheduled maintenance for the roadbed, or other relevant information for roadbed maintenance planning.

In some embodiments, the method 700 may include generating (e.g., by the platform server 130), based on characteristics of the first irregularity and/or the second irregularity, an additional roadbed treatment to remedy the first irregularity and/or the second irregularity. The method 700 may further include displaying information about the additional roadbed treatment to the user via the GUI. The method 700 may further include implementing, at the request of the user, the additional roadbed treatment (e.g., by transmitting the additional roadbed treatment to one or more vehicles 110) to remedy the identified real-world failure point associated with the first irregularity and/or to prevent formation of the predicted real-world failure point associated with the second irregularity.

Although described in the context of a set of one or more processors, the steps of the methods 600 and 700 may be carried out, in whole or in part, by a vehicle (e.g., one or more vehicles 110), a server (e.g., the platform server 130 or a network of servers), a client device (e.g., one or more client devices 140), or any other computer system 200 connected to the network 120 (or a combination thereof). In various embodiments, the methods 600 and 700 may be performed in a distributed manner by different vehicles, servers, and/or client devices and steps may occur over multiple stages of roadbed construction or maintenance. For example, when an existing roadbed is resurfaced, vehicles(s) may scan one or more sub-surface layers to begin generating a 3D layered mapping even when a comprehensive mapping from construction is not available. Accordingly, identification and prediction of real-world failure points in the roadbed may improve over time.

### Additional Considerations

The foregoing techniques improve the process of roadbed construction and maintenance by enabling a detailed understanding of each stage of a roadbed's life cycle. Identifying irregularities with precision allows for proactive maintenance, reducing costly repairs and enhancing safety. Predicting potential failure points before they manifest in the real world enables timely interventions, ensuring the structural integrity and longevity of the roadbed. The integration of user feedback and real-time data processing exemplifies a forward-thinking approach to infrastructure management, paving the way for smarter and more resilient road systems.

Some portions of the preceding detailed descriptions have been presented in terms of algorithms and symbolic representations of operations on data bits within a computer memory. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof. The software modules described herein may be embodied as program code (e.g., software comprised of instructions stored on non-transitory computer readable storage medium and executable by at least one processor) and/or hardware (e.g., application specific integrated circuit (ASIC) chips or field programmable gate arrays (FPGA) with firmware). The modules correspond to at least having the functionality described herein when executed/operated.

The present disclosure also relates to an apparatus for performing the operations herein. This apparatus may be specially constructed for the intended purposes, or it may include a computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

A processing device as described herein may include one or more processors such as a microprocessor, a central processing unit, or the like. More particularly, the processing device may be complex instruction set computing (CISC) microprocessor, reduced instruction set computing (RISC) microprocessor, very long instruction word (VLIW) microprocessor, or a processor implementing other instruction sets, or processors implementing a combination of instruction sets. The processing device may also be one or more special-purpose processing devices such as an application specific integrated circuit (ASIC), a field programmable gate array (FPGA), a digital signal processor (DSP), network processor, or the like. The processing device may be configured to execute instructions for performing the operations and steps described herein. A controller or microcontroller as described herein may include one or more processors, such as a central processing unit, internal memory, and input/output components. The controller may communicatively couple processing devices such that one processing device may manage the operation of another processing device through the controller. A controller may be communicatively coupled to a processing device through a CAN bus.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment. In addition, use of the "a" or "an" are employed to describe elements and components of the embodiments herein. This description should be read to include one or at least one and the singular also includes the plural unless it is obvious that it is meant otherwise. **[0073]** As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and Bis true (or present), and both A and Bare true (or present).

## Claims

1. A method of failure analysis for a roadbed (300), the method comprising:
accessing (710) a three-dimensional mapping of the roadbed (300), the three-dimensional mapping comprising two or more layers (310-350) of the roadbed (300), wherein each layer (310-350) corresponds to a different stage of the roadbed's construction or maintenance;
identifying (730) a first irregularity in the three-dimensional mapping associated with an identified real-world failure point of the roadbed (300);
identifying (740) a second irregularity in the three-dimensional mapping having at least a threshold similarity to the first irregularity, wherein the second irregularity is associated with a predicted real-world failure point of the roadbed (300); and
causing (770) a user to be notified of the predicted real-world failure point of the roadbed (300).

2. The method of claim 1, wherein the first irregularity and the second irregularity are identified by detecting deviations in material properties within each layer (310-350) of the three-dimensional mapping.

3. The method of claim 1, wherein causing (770) the user to be notified of the predicted real-world failure point of the roadbed (300) comprises:
storing (760) the predicted real-world failure point in a database (139); and
causing a client device (140) to display an alert in a graphical user interface (GUI) (500).

4. The method of claim 1, wherein identifying (740) the second irregularity in the three-dimensional mapping based on similarity to the first irregularity comprises:
determining a first failure mode for the identified real-world failure point based on the first irregularity in the three-dimensional mapping;
determining a second failure mode for the second irregularity in the three-dimensional mapping which is a same failure mode as the first failure mode; and
identifying a point on a surface of the three-dimensional mapping of the roadbed (300) corresponding to a location of the second irregularity, wherein the point on the surface is the predicted real-world failure point of the roadbed (300).

5. The method of claim 1, further comprising:
generating, based on the identified first irregularity, a roadbed treatment to remedy the first irregularity.

6. The method of claim 5, further comprising:
providing, to a machine (110), the roadbed treatment, wherein the machine (110) implements the roadbed treatment to remedy the first irregularity at the identified real-world failure point.

7. The method of claim 6, further comprising:
determining, based on the first irregularity and the second irregularity, an additional roadbed treatment to remedy the first irregularity.

8. The method of claim 7, further comprising:
providing, to a machine (110), the additional roadbed treatment, wherein the machine (110) implements the additional roadbed treatment to prevent the predicted real-world failure point.

9. A method of generating a three-dimensional roadbed mapping, the method comprising:
scanning (610), by a first sensor (115) during a first stage of roadbed construction or maintenance, a roadbed (300) to generate data representing the first stage of the roadbed;
scanning (620), by a second sensor (115) during a second stage of roadbed construction or maintenance, the roadbed (300) to generate data representing the second stage of the roadbed;
determining (640), from the generated data, a plurality of three-dimensional data points representing the first stage and the second stage of the roadbed (300); and
generating (650), using the plurality of three-dimensional data points, a layered representation of the roadbed, wherein each layer (310-350) corresponds to a different stage of the roadbed's construction or maintenance.

10. The method of claim 9, wherein the first sensor or the second sensor (115) comprises a depth sensor, a temperature sensor, a density sensor, a moisture sensor, or a color sensor.

11. The method of claim 9, wherein the first sensor or the second sensor (115) is a vehicle-mounted sensor configured to scan as a vehicle (110) traverses the roadbed (300).

12. A vehicle (110) comprising:
a sensor suite (440) comprising a depth sensor and an infrared sensor (115) configured to scan a roadbed (300) surface during two or more stages of roadbed construction or maintenance; and
a non-transitory computer-readable storage medium (204) configured to store sensor data, including depth data and infrared data;
wherein the vehicle (110) is configured to transmit the sensor data to a remote server (130) to generate a three-dimensional roadbed map using the sensor data from the two or more stages.

13. The vehicle (110) of claim 12, wherein the depth sensor (115) is a light detection and ranging (LiDAR) sensor and the infrared sensor (115) is a thermal camera.

14. The vehicle (110) of claim 12, wherein the vehicle (110) is an autonomous vehicle (430a).

15. The vehicle (110) of claim 12, wherein the vehicle (110) is an unmanned aerial vehicle (UAV) (430c).
